# EUROPEAN PATENT APPLICATION

(11) **EP 2 127 538 A1**
(43) Date of publication of application: **02.12.2009**
(21) Application number: 08380162.1
(22) Date of filing: 29.05.2008
(51) Int. Cl.: A23L 1/20, A23L 2/38, A23L 2/52, A23C 11/00

(54) **Method of obtaining a liquid foodstuff containing soyabean and seaweed, and liquid foodstuff obtained**

(71) Applicant: Liquats Vegetals SA, Girona (ES)
(72) Inventor: Erra Serrabasa, Josep Maria, 17005 Girona (ES)
(74) Representative: Gislon, Gabriele

(57) **Abstract**

The invention relates to a method for obtaining a soy and algae-based liquid food product and the liquid food product obtained. The method comprises preparing a mixture with the following ingredients:
- whole shelled soy,
- water, and
- dry marine alga as a stabilizer,

wherein said dry marine alga and said soy are already crushed or are crushed while preparing the mixture, with a controlled heat supply for their activation, so that said mixture produces a fluid paste from which, by centrifugation, a liquid part providing said food product is separated.

The mentioned dry marine alga is obtained from a whole red alga selected from the group comprising at least one of the following algae genera: Chondrus, Gigartina, Eucheuma.

The food product is obtained by means of applying the mentioned method.

## Description

### Field of the Art

The present invention relates to a method for obtaining a soy-based liquid food product and to a liquid food product obtained by means of applying the mentioned method.

The invention thus provides a drinkable liquid food product incorporating as components soy and dry marine algae, the latter as a stabilizer.

### Prior State of the Art

Several food products containing soy, some of them being drinkable liquids and others being in a solid format, are known in the state of the art, the drinkable products having in common the fact that they form a beverage known as "soy milk or beverage".

Soy-based food products which incorporate marine algae among their components are also known. Thus, patent CN-A-1409976 describes a soy milk powder-based product with a seaweed and the method for preparing it. In the mentioned patent, the seaweed used to obtain said product is obtained from fresh or dried seaweed subjected to procesSes for the removing of impurities, deodorization, desiccation, flavoring and cutting.

Likewise, patent JP-A-6062778 relates to a food in a solid format containing soy milk, solidifying the soy milk and edible marine algae. The method for obtaining the mentioned food uses powdered marine algae mixed with a suitable amount of water, heating this mixture until the algae are dissolved in the water, and filtering the mixture thus obtained. Soy milk is added to the filtered solution in an equivalent amount, heating again and stirring slowly until it boils. The resulting mixture is cooled and solidified, obtaining the mentioned food.

Patent KR-A-20020025940 describes a method for manufacturing a soy milk-based dietary supplement containing medicinal herbs, marine algae, animals, plants, healthy foods and fungi among its components. The soy milk obtained thus comprises pharmacological components, organic acids, several vitamins and other healthy nutrients.

Patent JP-A-11187839 relates to a soy milk-based food preparation, subjecting it to a coagulation process to produce tofu. A marine algae extract, among other ingredients, is used in the process for preparing this food preparation, which extract is mixed with a coagulating agent to obtain the mentioned tofu.

The present invention offers an alternative to the state of the art which enables obtaining a soy and marine algae-based drinkable liquid food product, said algae being selected from red algae and acting as a stabilizer, incorporating a series of additional ingredients.

### Description of the Invention

In a first aspect, the present invention relates to a method for obtaining a soy-based drinkable liquid food product, which comprises preparing a mixture with the following ingredients:
- whole shelled soy,
- water, and
- dry marine alga as a stabilizer,
wherein said dry marine alga and said soy are already crushed or are crushed while preparing the mixture, with a controlled heat supply for their activation, so that said mixture produces a fluid paste from which, by centrifugation, a first part is separated by decanting or filtration, leaving a second liquid part providing said liquid food product in a liquid form such as a solution. The mentioned heat supply to the described process for preparing the mixture is carried out in a preferred embodiment by means of using hot water at a temperature of 60-90°C.

Different ingredients such as calcium salts or other minerals, sugars, sweeteners, vitamins, soluble cereals, coffee and cocoa, which can comprise from 0 to 15% of the total weight of the dry matter, can be added to this liquid part.

The dry marine alga used to obtain the mentioned food product is obtained from a whole alga, the mentioned whole alga being a red alga of the genus Chondrus, species Chrondus Crispus, a red alga of the genus Gigartina, or a red alga of the genus Eucheuma, depending on the embodiment.

According to the proposal of the present invention, the mentioned mixture comprises:
- water as 80-90% of the total weight of the solution;
- soy in a ratio by weight with respect to the total solution between 10 and 20%, and
- marine alga in a ratio by weight with respect to the total solution between 0.01 and 0.15%.

In the method described in the present invention, said soy and said dry marine alga are crushed (either in separate steps or together) by fine grinding.

Likewise, the method of the present invention comprises a final processing step for homogenizing the mixture which provides a stable emulsion, in which the dry marine alga acts as a stabilizer, preventing the formation of lees.

In a second aspect, the invention likewise comprises a soy-based drinkable liquid food product, which is presented in the form of a solution containing:
- whole shelled soy,
- water, and
- dry marine alga as a stabilizer, said dry marine alga and said soy being finely crushed to formulate a liquid form of the product, which for one embodiment is a solution, whereas for another embodiment it is a stable emulsion.

The drinkable food product object of the present invention comprises in a ratio by weight with respect to the total solution, between 6 and 18% of soy and between 0.01 and 0.15% of marine alga. It also comprises at least one additional ingredient of the group consisting of the following ingredients: calcium salts or other minerals and vitamins in a ratio of up to 0.5% of the total weight of dry matter; and soluble cereals, sugars, sweeteners, coffee and cocoa, or a combination thereof comprising 0.1-15% of the total weight of dry matter.

Other features of the invention will be observed in the detailed description of several embodiments which are detailed below by way of a non-limiting explanation.

### Brief Description of the Drawings

The previous and other advantages and features will be more fully understood from the following detailed description of an embodiment with reference to the attached drawings, in which:
- Figure 1 is a flow chart describing the steps through which the marine alga and the soy pass from their reception in the warehouses until they are mixed and the metered base product is obtained; and
- Figure 2 is a flow chart showing the steps for obtaining the packaged end product from the metered base product.

### Detailed Description of an Embodiment

The present invention relates to a method for obtaining a soy-based food product in a liquid and therefore drinkable format, and to the drinkable product thus obtained.

The mentioned method comprises preparing a mixture with the following ingredients:
- whole shelled soy,
- water, and
- dry marine alga as a stabilizer.

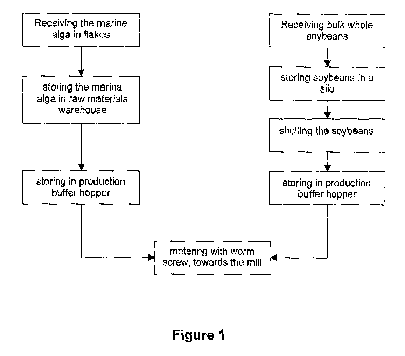

Figure 1 shows in a flow chart the steps comprising the marine alga and the soy from their arrival at the warehouses until they are mixed and the metered base product is obtained, in which suitable percentages of soy and marine alga are mixed to obtain the food product object of the present invention.

In a preferred embodiment, the marine alga used is obtained from a whole red alga selected from the group comprising at least one of the following algae genera: Chondrus, Gigartina, Eucheuma. The mentioned marine alga is subjected to drying, using it for the mentioned mixture in the form of flakes.

As regards the percentages of the different ingredients comprised in the mixture, they are the following:
- water as 80-90% of the total weight of the solution;
- soy in a ratio by weight with respect to the total solution between 10 and 20%, and
- alga in a ratio by weight with respect to the total solution between 0.01 and 0.15%.

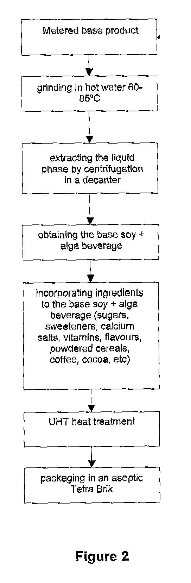

In addition, Figure 2 shows the steps comprised in obtaining the mentioned food product from obtaining the metered base product until its packaging in a Tetra Brik.

According to the embodiment described in said figures, the dry marine alga and the soy are crushed by fine grinding while preparing the mixture, with a controlled heat supply for their activation by means of heating water at a temperature of 60-90°C, so that said mixture produces a fluid paste from which, by centrifugation in a decanter, a liquid part providing said food product in the form of a solution forming the base soy and marine alga beverage is separated.

Different ingredients such as calcium salts or other minerals, sugars, sweeteners, vitamins, soluble cereals, coffee and cocoa, which can comprise from 0.1 to 15% of the total weight of the dry matter, can be incorporated in this base soy and marine alga beverage.

Finally, the mixture is subjected to a final processing step for its homogenization, obtaining a stable emulsion forming the soy-based drinkable liquid food product with dry marine alga as a stabilizer, object of the present invention.

A person skilled in the art could introduce changes and modifications in the described embodiments without departing from the scope of the invention as it is defined in the attached claims.

## Claims

1. A method for obtaining a soy-based drinkable liquid food product, **characterized in that** it comprises preparing a mixture with the following ingredients:
- whole shelled soy,
- water, and
- dry marine alga as a stabilizer,
wherein said dry marine alga and said soy are already crushed or are crushed while preparing the mixture, with a controlled heat supply for their activation, so that said mixture produces a fluid paste from which, by centrifugation, a liquid part providing said food product is separated.

2. The method according to claim 1, **characterized in that** said heat supply is carried out through heating the water used at a temperature of 60-90°C to carry out the mixture.

3. The method according to claim 1, **characterized in that** said separation of a liquid part from said fluid paste is carried out by decanting or filtration and **in that** the drinkable liquid food product obtained is presented in the form of a solution.

4. The method according to claim 1, **characterized in that** said dry marine alga is a red alga selected from the group comprising at least one of the following algae genera: Chondrus, Gigartina, Eucheuma.

5. The method according to claim 1, **characterized in that** said mixture comprises:
- water as 80-90% of the total weight of the solution;
- soy in a ratio by weight with respect to the total solution between 10 and 20%, and
- alga in a ratio by weight with respect to the total solution between 0.01 and 0.15%.

6. The method according to claim 1, **characterized in that** it comprises adding to the solution at least one additional ingredient from the group consisting of the following ingredients: calcium salts or other minerals, sugars, sweeteners, vitamins, soluble cereals, coffee and cocoa, or a combination thereof.

7. The method according to claim 6, **characterized in that** said ingredients comprise 0-15% of the total of said dry matter.

8. The method according to claim 6, **characterized in that** it comprises a final processing step for homogenizing the mixture which yields a stable emulsion.

9. A drinkable liquid food product, **characterized in that** it comprises:
- whole shelled soy,
- water, and
- dry marine alga as a stabilizer, said dry marine alga and said soy being finely crushed to formulate a liquid form of the product.

10. The liquid food product according to claim 9, **characterized in that** said liquid form of the product is a solution or a stable emulsion.

11. The liquid food product according to claim 9, **characterized in that** said dry marine alga is obtained from a whole alga selected from the group comprising at least one of the following algae genera: Chondrus, Gigartina, Eucheuma.

12. The liquid food product according to anyone of claims 9 to 11, **characterized in that** said solution comprises, in a ratio by weight with respect to the total solution, from between 6 to 18% of soy and from between 0.01 to 0.15% of dry marine alga.

13. The liquid food product according to claim 10, **characterized in that** said solution comprises at least one additional ingredient from the group consisting of the following ingredients: calcium salts or other minerals and vitamins in a ratio of up to 0.5% of the total weight of dry matter.

14. The liquid food product according to claim 10, **characterized in that** said solution comprises at least one additional ingredient from the group consisting of the following ingredients: soluble cereals, sugars, sweeteners, coffee and cocoa, or a combination thereof comprising 0.1-15% of the total weight of dry matter.

15. The liquid food product according to claim 9, obtainable by means of applying the method according to any one of claims 1 to 8.
